# FASCICULE DE BREVET EUROPEEN

(11) **EP 2 620 367 B1**
(45) Date de publication et mention de la délivrance du brevet: **07.09.2016**
(21) Numéro de dépôt: 13000131.6
(22) Date de dépôt: 11.01.2013
(51) Int. Cl.: B64D 13/06, B64D 13/08

(54) **INSTALLATION À TRAITEMENT THERMIQUE DE FLUIDE POUR GIRAVION, ASSOCIANT UN SYSTÈME DE REFROIDISSEMENT D'UN GROUPE DE MOTORISATION ET UN SYSTÈME DE CHAUFFAGE DE L'HABITACLE**
INSTALLATION ZUR THERMISCHEN BEHANDLUNG EINES FLUIDS FÜR DREHFLÜGLER, WELCHE DAS KÜHLSYSTEM DER ANTRIEBSGRUPPE UND EIN KABINENHEIZUNGSSYSTEM KOMBINIERT
INSTALLATION FOR THE HEAT TREATMENT OF A FLUID FOR ROTORCRAFT, COMBINING A COOLING SYSTEM OF THE ENGINE GROUP AND AN INTERIOR HEATING SYSTEM

(30) Priorité: 24.01.2012 FR 1200191
(43) Date de publication de la demande: 31.07.2013
(73) Titulaire: Airbus Helicopters, 13725 Marignane Cedex (FR)
(72) Inventeur: Pommé, Vincent, F-13170 LES Pennes Mirabeau (FR)
(74) Mandataire: GPI & Associés

(56) Documents cités:
- EP-A2- 1 790 568
- US-A- 2 774 552
- US-A1- 2004 261 428
- US-A1- 2009 260 387
- US-B1- 8 042 354

## Description

La présente invention est du domaine des installations à traitement thermique de fluide embarquées à bord des aéronefs, giravion plus particulièrement. De telles installations comprennent dans leur globalité divers systèmes de traitement thermique d'un fluide, dont notamment un système de refroidissement d'un groupe de motorisation principal équipant le giravion, et un système de traitement thermique de l'air à l'intérieur de l'habitacle du giravion.

Le document US2774552 divulgue un giravion avec une installation à traitement thermique du type du préambule de la revendication 1.

Les aéronefs sont équipés d'une installation à traitement thermique de fluide, composée de divers systèmes de traitement thermique d'un fluide qui sont respectivement dédiés à des fonctions particulières. Dans sa globalité, l'installation est à considérer comme regroupant divers circuits de conduite d'un fluide qui est traité thermiquement. Les organisations propres des systèmes de traitement thermique sont dépendantes de leurs fonctions respectives et de la nature des fluides qu'ils exploitent individuellement.

Les aéronefs, giravions notamment, sont équipés d'un groupe de motorisation principal procurant leur sustentation et/ou leur propulsion. Un tel groupe de motorisation comprend notamment au moins un organe moteur en prise sur une boîte de transmission principale entraînée à partir de l'organe moteur. La boîte de transmission principale est exploitée pour l'entraînement d'organes de propulsion de l'aéronef et d'accessoires équipant l'aéronef. Des chaînes cinématiques spécifiques d'entraînement de divers équipements de l'aéronef sont susceptibles d'être entraînées à partir de la boîte de transmission principale ou par des boîtes de transmission secondaires qui leurs sont respectivement affectées, voire encore à partir d'organes moteurs propres individuellement alimentés en énergie, tel qu'à partir du réseau de bord de l'aéronef.

Plus particulièrement dans le cas des giravions, le groupe de motorisation principal est exploité pour l'entraînement d'un ou de plusieurs rotors équipant le giravion, voire encore d'hélices propulsives dans le cas des hélicoptères hybrides. Les rotors et/ou les hélices propulsives sont entraînés en rotation à partir de la boîte de transmission principale, pour procurer au moins la sustentation sinon aussi la propulsion et/ou le guidage du giravion. L'organe moteur est par exemple un moteur diesel ou un turbomoteur, voire tout autre organe moteur apte à développer une puissance d'entraînement au moins des rotors et/ou des hélices propulsives en rotation, voire encore d'accessoires ou d'équipements du giravion.

Il est à considérer par boîte de transmission un organe de l'aéronef interposé entre un organe moteur et un organe à entraîner, sans préjuger de l'organisation propre et/ou de la fonction de l'organe à entraîner ni des modalités d'implantation de la boîte de transmission sur une chaîne cinématique du giravion. Les boîtes de transmission, et notamment la boîte de transmission principale, sont soumises en fonctionnement à des élévations de température qu'il est nécessaire de réguler. Il est à considérer par boîte de transmission un quelconque organe soumis à entraînement, dont la température doit être régulée.

L'installation à traitement thermique de fluide comprend à cet effet un système de refroidissement d'une ou de plusieurs boîtes de transmission. Un tel système de refroidissement comprend au moins un circuit fermé de circulation d'un fluide à refroidir, à l'état liquide notamment, entre la boîte de transmission et un échangeur de chaleur. Le fluide à refroidir est couramment un lubrifiant qui circule depuis la boîte de transmission vers l'échangeur de chaleur pour induire un abaissement de la température du fluide à refroidir, puis depuis l'échangeur de chaleur vers la boîte de transmission pour son refroidissement.

L'échangeur de chaleur est couramment agencé en radiateur ou organe analogue d'échange thermique entre un flux d'air et le fluide à refroidir. L'échangeur de chaleur comporte un circuit interne de circulation du fluide à refroidir et une structure à échange thermique de type à ailettes ou analogues entre l'échangeur de chaleur et un flux d'air de refroidissement. L'échangeur de chaleur est équipé d'un organe de ventilation générateur du flux d'air de refroidissement traversant la structure à échange thermique. Un tel organe de ventilation est couramment agencé en ventilateur à hélice, dont la motorisation permet de générer le flux d'air et d'entraîner ce flux d'air à travers l'échangeur de chaleur.

De telles modalités d'organisation d'un système de refroidissement d'une boîte de transmission sont traditionnelles dans le domaine général des véhicules. L'exploitation de tels systèmes de refroidissement pour un giravion présente des inconvénients, notamment au regard de la déperdition d'énergie et des difficultés liées à leur implantation sécurisée sur le giravion.

Par exemple en ce qui concerne l'organe de ventilation, l'énergie nécessaire à son entraînement est définie constante au regard des besoins optimum en refroidissement de l'échangeur de chaleur. Dans le cas d'un giravion notamment, de tels besoins optimum sont définis au regard d'une situation de vol stationnaire du giravion et/ou d'une situation de températures extérieures au giravion élevées. Il en ressort une perte d'énergie dans les autres situations dans lesquelles est placé le giravion, en raison de l'entraînement de l'organe de ventilation à puissance consommée constante. Une telle perte d'énergie est significativement induite en situation de vol de croisière et/ou en situation de basses températures extérieures au giravion. Dans de telles situations, les besoins en refroidissement de la boîte de transmission principale ne nécessitent pas une dite puissance consommée constante.

Il est en outre souhaitable que l'organe de ventilation que comporte le système de refroidissement soit alimenté en énergie à partir de son entraînement par la boîte de transmission principale, pour éviter un prélèvement en énergie électrique à partir du réseau de bord et une extension conséquente du circuit fermé. La proximité entre l'organe de ventilation et de la boite de transmission principale rend délicate l'implantation de l'organe de ventilation dans une zone du giravion logeant des organes de puissance, avec pour contraintes de sécuriser et de fiabiliser le fonctionnement de l'organe de ventilation.

Par ailleurs, les aéronefs comportent un habitacle dont l'air doit être traité thermiquement. Il est à considérer par habitacle tout espace de l'aéronef réservé à la réception des personnes et/ou des marchandises. Le traitement thermique de l'air de l'habitacle vise à procurer un confort pour les passagers et/ou une préservation des marchandises, et est notamment relatif à une fonction de ventilation, de chauffage et/ou de climatisation de l'habitacle.

L'installation à traitement thermique de fluide comprend à cet effet un système de traitement thermique de l'air ambiant de l'habitacle. Le traitement thermique de l'air de l'habitacle comprend notamment un circuit ouvert d'acheminement et/ou de traitement thermique de divers flux d'air, associant plusieurs circuits d'air.

Selon un exemple de réalisation, le système de traitement thermique de l'air de l'habitacle comprend un ou plusieurs dispositifs autonomes de ventilation, de chauffage et/ou de climatisation. De tels dispositifs autonomes sont alimentés en énergie électrique à partir du réseau de bord et sont répartis à l'intérieur de l'habitacle.

Selon une forme plus complexe de réalisation, le système de traitement thermique de l'air de l'habitacle exploite avantageusement une source de chaleur en provenance du groupe de motorisation principal pour chauffer l'air ambiant de l'habitacle. Une telle source de chaleur est notamment extraite d'un compresseur principal que comprend le groupe de motorisation principal, dans le cas spécifique où l'organe moteur est un turbomoteur. Selon cette forme de réalisation, le système de traitement thermique de l'air de l'habitacle comprend plusieurs circuits d'air répartis sur le giravion.

Un premier circuit d'air est un circuit de prélèvement d'air chaud depuis le compresseur principal vers au moins un appareil de traitement thermique d'air. Le premier circuit d'air comporte un ou plusieurs conduits d'acheminement de l'air chaud en provenance du compresseur principal vers l'appareil de traitement thermique d'air placé au plus proche de l'habitacle.

Un deuxième circuit d'air est un circuit de prélèvement forcé d'air frais extérieur au giravion, et d'acheminement de l'air frais prélevé vers l'appareil de traitement thermique d'air. Le prélèvement forcé d'air frais est réalisé à partir d'un organe de ventilation placé à l'intérieur du deuxième circuit d'air. Un tel organe de ventilation est couramment du type agencé en ventilateur à hélice alimenté en énergie électrique à partir du réseau de bord du giravion. Le deuxième circuit d'air est avantageusement mis à profit pour obtenir une ventilation de l'habitacle, en étant en communication aéraulique avec un circuit annexe d'air dédié à cette fonction. Le circuit annexe d'air procure une admission de l'air frais extérieur en provenance du deuxième circuit d'air, directement vers l'intérieur de l'habitacle.

La régulation de la température de l'air de l'habitacle est obtenue à partir d'un mélange sélectif réalisé à l'intérieur de l'appareil de traitement thermique d'air, entre l'air frais extérieur et l'air chaud en provenance du compresseur principal. L'appareil de traitement thermique d'air comprend un mélangeur d'air pourvu d'un éjecteur de l'air chaud hors du premier circuit d'air, et d'une bouche d'admission d'air frais en provenance du deuxième circuit d'air. Des moyens de régulation d'air procurent des admissions sélectives d'air chaud et d'air frais extérieur à l'intérieur du mélangeur, en fonction des besoins en air tempéré évacué hors de l'appareil de traitement thermique d'air vers l'habitacle.

L'exploitation des différents systèmes de traitement thermique de l'air de l'habitacle présente des inconvénients, notamment au regard de la déperdition d'énergie, des nuisances sonores et/ou des difficultés liées à leur implantation sécurisée sur le giravion.

Par exemple au regard de la déperdition d'énergie, les dispositifs autonomes de ventilation, de chauffage et/ou de climatisation sont consommateurs d'une part importante de l'énergie électrique du giravion, ce qui est à éviter.

Par exemple encore pour les systèmes de traitement thermique d'air exploitant l'air chaud produit par le groupe de motorisation principale, il apparaît notamment des nuisances sonores et des difficultés d'intégration sécurisée sur le giravion.

Les nuisances sonores sont induites par l'éjecteur d'air chaud en provenance du compresseur principal, qui débouche à l'intérieur du mélangeur d'air. De telles nuisances sonores sont induites par la détente de l'air chaud comprimé qui est libéré à l'intérieur du mélangeur. Un tel inconvénient est connu et on pourra se reporter au document US6139423 (SIKORSKY AIRCRAFT CORP.) qui propose une solution pour atténuer de telles nuisances sonores.

L'intégration sécurisée des conduits d'acheminement de l'air chaud en provenance du compresseur principal vers l'appareil de traitement thermique est délicat. De tels conduits s'étendent le long du fuselage du giravion, et il doit être pris en compte la température élevée de l'air qu'ils acheminent pour sécuriser l'implantation des conduits sur le giravion.

Il apparaît d'une manière générale que les installations à traitement thermique de fluide équipant les aéronefs, giravions notamment, méritent d'être améliorées, notamment au regard de la déperdition d'énergie, de la sécurisation de leur implantation et/ou des nuisances sonores éventuellement induites. De telles installations méritent encore d'être améliorées en simplifiant au mieux leur structure et leurs modalités de fonctionnement, sans affecter ni leur efficacité ni leur implantation sécurisée à bord du giravion. Il doit encore être recherché une réduction optimisée de leurs coûts d'obtention et d'installation à bord de l'aéronef, et de leurs coûts de maintenance.

La présente invention a pour objet une installation à traitement thermique de fluide pour aéronef, giravion notamment, comprenant globalement plusieurs systèmes de traitement thermique de fluide. Une telle installation comprend notamment au moins un système de traitement thermique de l'air à l'intérieur de l'habitacle du giravion et au moins un système de refroidissement par circulation d'un fluide à refroidir à l'intérieur d'un circuit fermé. Le système de refroidissement est affecté au refroidissement d'au moins un organe à refroidir, boîte de transmission notamment, et plus particulièrement au refroidissement d'une boîte de transmission principale d'un groupe de motorisation principale équipant le giravion.

Le but de la présente invention est de proposer une telle installation à traitement thermique de fluide pour aéronef, giravion notamment, procurant des solutions au regard des contraintes qui ont été précédemment énoncées.

Il est recherché par la présente invention de proposer une telle installation dont l'organisation procure son fonctionnement économe en énergie et dont la structure est simple avec un nombre limité de composants, tout en étant fiable et sécurisée.

L'installation est recherchée d'une architecture facile à intégrer à bord de l'aéronef, en réduisant les coûts induits par son fonctionnement, par son obtention et son implantation à bord de l'aéronef, et par les opérations nécessaires à sa maintenance. L'organisation de l'installation est recherchée autorisant son fonctionnement pour divers aéronefs présentant des caractéristiques propres, sans induire de profondes modifications structurelles.

Les caractéristiques propres des divers aéronefs sont notamment à considérer au regard de la puissance et de la structure de leur motorisation, ainsi que du fonctionnement des accessoires et/ou des équipements dont ils sont spécifiquement équipés. Il est aussi à considérer les divers volumes d'air des habitacles à traiter thermiquement.

Plus particulièrement il est recherché de permettre à moindres coûts et sans modification structurelle majeure, une transposition de l'installation entre divers giravions à besoins spécifiques de traitement thermique de fluide, tant au regard du ou des systèmes de refroidissement qu'au regard du ou des systèmes de traitement thermique d'air que comprend l'installation.

Plus particulièrement encore, les dites économies d'énergie propres au fonctionnement de l'installation doivent être obtenues quelles que soient les caractéristiques propres de divers types de giravions sur lesquels l'installation doit être apte à être implantée.

La présente invention a aussi pour objet un aéronef, giravion notamment, équipé d'une installation à traitement thermique de fluide comprenant au moins un système de traitement thermique de l'air à l'intérieur de l'habitacle du giravion et au moins un système de refroidissement par circulation d'un fluide à refroidir à l'intérieur d'un circuit fermé.

Subsidiairement, la présente invention a aussi pour objet un appareil à traitement thermique de fluide spécifique, avantageusement exploitable par l'installation et procurant les économies d'énergie recherchées.

L'installation de la présente invention est une installation à traitement thermique de fluide pour aéronef, giravion notamment. Une telle installation comprend au moins un système de refroidissement d'au moins un organe à refroidir, et au moins un système de traitement thermique de l'air d'un habitacle de l'aéronef.

L'organe à refroidir est notamment une boîte de transmission principale que comprend un groupe de motorisation principal équipant le giravion. Il est cependant à considérer que l'organe à refroidir est susceptible d'être un quelconque organe équipant le giravion, dont la mise en fonctionnement induit son élévation en température qu'il est nécessaire d'abaisser.

Le dit système de refroidissement comprend un circuit fermé de circulation d'un fluide à refroidir entre l'organe à refroidir et au moins un échangeur de chaleur équipé d'un organe de ventilation. L'échangeur de chaleur est interposé sur le circuit fermé par l'intermédiaire d'un circuit interne de circulation du fluide à refroidir qu'il intègre. L'échangeur de chaleur comporte une structure à échange thermique, à travers laquelle circule un flux d'air de refroidissement généré par l'organe de ventilation.

Le fluide à refroidir circulant à l'intérieur du circuit fermé est notamment un liquide lubrifiant de l'organe à refroidir. Le circuit fermé conduit le fluide à refroidir au moins depuis l'organe à refroidir vers l'échangeur de chaleur, puis depuis l'échangeur de chaleur vers l'organe à refroidir. Pour des raisons de limitation d'encombrement du circuit fermé, l'échangeur de chaleur et l'organe de ventilation dont il est équipé sont contraints d'être placés à proximité de l'organe à refroidir.

La structure à échange thermique est du type agencée en structure à ailettes ou toute autre structure à échange thermique analogue dans laquelle est optimisée une surface d'échange thermique entre l'échangeur de chaleur et le flux d'air de refroidissement.

Le dit système de traitement thermique d'air comprend des moyens de régulation d'un flux d'air de chauffage admis vers l'habitacle. Le système de traitement thermique d'air comprend aussi un circuit ouvert d'acheminement d'une pluralité de flux d'air. Le circuit ouvert comporte un premier circuit d'air, d'acheminement d'un flux d'air source généré par un compresseur vers au moins un appareil de traitement thermique. Le circuit ouvert comporte encore un deuxième circuit d'air, d'acheminement vers l'habitacle du dit flux d'air de chauffage issu du traitement thermique du flux d'air source.

Il est à considérer que le compresseur est un quelconque organe de compression d'un fluide caloporteur, air notamment, sans préjuger de sa structure propre. Le compresseur comporte une entrée d'air qu'il prélève par aspiration pour le refouler à l'état comprimé à l'intérieur du circuit ouvert. L'ouverture sur l'extérieur du circuit ouvert induit une détente de l'air comprimé qu'il achemine lors de son échappée hors du circuit ouvert. Le flux d'air source est acheminé vers l'appareil de traitement thermique à travers le premier circuit d'air, pour obtenir par l'intermédiaire des moyens de régulation une température recherchée de l'air de chauffage. L'air de chauffage est issu au moins en partie du flux d'air source, et est admis à l'intérieur de l'habitacle par l'intermédiaire du deuxième circuit d'air.

L'installation de la présente invention est principalement reconnaissable en ce que le dit organe de ventilation est un ventilateur à rampe d'éjection générateur du flux d'air de refroidissement à partir d'un flux d'air d'activation. Le ventilateur à rampe d'éjection est du type selon lequel un écoulement d'un flux d'air d'activation admis à l'intérieur du ventilateur le long d'au moins une première rampe, est générateur par effet Coanda d'un entraînement d'air à travers le ventilateur le long d'une deuxième rampe proche de la première rampe. Le dit entraînement d'air provoque la formation du flux d'air de refroidissement à travers ladite structure à échange thermique de l'échangeur de chaleur.

En outre, le système de refroidissement et le système de traitement thermique comprennent un groupe d'organes communs, dont au moins :
a) le dit compresseur générateur d'un flux d'air source à pression et température modérées. Le compresseur est plus particulièrement un compresseur accessoire pourvu d'une entrée d'air et entraîné à partir d'un organe moteur. L'organe moteur est avantageusement l'organe moteur que comprend le groupe de motorisation principal équipant le giravion, à partir duquel est entraîné le compresseur accessoire par l'intermédiaire de la boîte de transmission principale.
   L'organe moteur est susceptible d'être de quelconque structure, en étant par exemple indifféremment constitué d'un organe moteur diesel ou d'un turbomoteur mettant en oeuvre un compresseur principal que comprend le groupe de motorisation principal. Il est à considérer que selon la démarche de la présente invention, il est choisi de ne pas exploiter un tel compresseur principal pour constituer le compresseur exploité par le système de traitement thermique d'air à partir duquel est formé le flux d'air de chauffage modifiant la température de l'air ambiant de l'habitacle.
   L'exploitation du dit compresseur accessoire permet de générer un dit flux d'air source à pression et température modérées, à partir d'une faible consommation en énergie prélevée depuis le groupe de motorisation principale et le cas échéant indépendamment comprend le groupe de motorisation principal. A titre indicatif pour éclairer la notion de modérée et sans préjuger des valeurs indiquées, le flux d'air source généré par le compresseur accessoire est porté à une pression relative de l'ordre de 0,5 à 1 bars et à une température de l'ordre de 50°, voire comprise entre 10° et 100° selon l'architecture du circuit ouvert et la capacité utile de fonctionnement de l'échangeur de chaleur pour le motif développé ci-après.
b) le dit échangeur de chaleur, formant des moyens coopérant de refroidissement du fluide à refroidir et de chauffage du flux d'air source, au moins en partie, en provenance du compresseur accessoire. Le chauffage du flux d'air source produit un flux d'air chaud par prélèvement de calories issues du fluide à refroidir circulant à l'intérieur de l'échangeur de chaleur. Un tel prélèvement de calories participe avantageusement au refroidissement de la structure à échange thermique et en conséquence du fluide à refroidir.
   Le flux d'air source étant à température modérée, son passage à travers l'échangeur est exploité pour refroidir au moins en partie le fluide à refroidir circulant dans le circuit fermé, et inversement pour réchauffer ce flux d'air. Le dit appareil de traitement thermique à partir duquel le flux d'air de chauffage est porté à la température recherchée, est formé non seulement par le compresseur accessoire, mais aussi par l'échangeur de chaleur exploité pour le refroidissement du fluide à refroidir circulant dans le circuit fermé.
   Une éventuelle faiblesse d'échange thermique entre le flux d'air de refroidissement et l'échangeur de chaleur est compensée par le dit prélèvement de calories à partir du flux d'air source à température modérée généré par le compresseur accessoire. Une telle faiblesse d'échange thermique est susceptible d'être induite par l'utilisation du ventilateur à rampe d'éjection, choisi en raison de la faible consommation en énergie nécessaire à son fonctionnement. Une telle faiblesse de consommation en énergie résulte non seulement de l'utilisation du ventilateur à rampe d'éjection pour former le dit organe de ventilation, mais aussi de l'exploitation du flux d'air source pour former le flux d'air d'activation pour le motif développé ci-après.
c) une vanne de distribution du dit flux d'air source sélectivement vers le ventilateur à rampe d'éjection en formant le flux d'air d'activation et/ou vers l'habitacle en formant le dit flux d'air de chauffage issu du dit flux d'air chaud. Ladite vanne de distribution est participante des dits moyens de régulation du flux d'air de chauffage admis à l'intérieur de l'habitacle, et induit l'admission du flux d'air source vers le ventilateur à rampe d'éjection pour son activation, soit avant soit après son chauffage par l'échangeur de chaleur.

Le flux d'air d'activation est issu du flux d'air source à partir d'une distribution inversement proportionnelle du flux d'air source entre le deuxième circuit d'air et le ventilateur à rampe d'éjection. L'air de chauffage est issu du flux d'air source après son chauffage par passage du flux d'air source à travers l'échangeur de chaleur. Le flux d'air d'activation est issu du flux d'air source, qui est susceptible d'être prélevé à cette fin sur le premier circuit d'air soit préalablement, soit postérieurement au passage du flux d'air source à travers l'échangeur de chaleur pour obtenir le flux d'air chaud.

Selon une forme préférée de réalisation, la vanne de distribution est placée sur le premier circuit d'air en sortie de l'échangeur de chaleur. Le flux d'air d'activation est plus spécifiquement issu du flux d'air chaud formé par le flux d'air source chauffé par l'échangeur de chaleur. Une telle solution permet de simplifier l'implantation de la vanne de distribution sur le premier circuit d'air, et de favoriser l'activation du ventilateur à rampe d'éjection à partir du flux d'air chaud.

Selon une variante, la vanne de distribution est placée sur le premier circuit d'air en amont de l'échangeur de chaleur dans le sens de circulation du flux d'air source dans le premier circuit d'air. Le flux d'air d'activation est directement issu du flux d'air source, seul le flux d'air chaud étant exploité pour former le flux d'air de chauffage.

Il est à considérer que la vanne de distribution est un organe de répartition inversement proportionnelle du flux d'air source vers le ventilateur à rampe d'éjection et/ou vers le deuxième circuit d'air après traversée de l'échangeur de chaleur par le flux d'air source. Plus particulièrement et selon les besoins respectifs du système de refroidissement et du système de traitement thermique d'air, le flux d'air source est distribué soit en parties inversement proportionnelles vers l'un et l'autre du ventilateur à rampe d'éjection et du deuxième circuit d'air. Ladite proportionnalité de distribution du flux d'air source est propre à relever d'une distribution en tout ou rien du flux d'air source vers l'un ou l'autre du ventilateur à rampe d'éjection et du deuxième circuit d'air.

A partir d'un constat fondé sur des besoins en énergie antagonistes respectivement pour le système de refroidissement et pour le système de traitement thermique d'air, il est inhabituellement proposé de mutualiser les ressources en énergie respectives des dits systèmes composant l'installation. Une telle mutualisation des ressources est organisée de sorte que soient sélectivement privilégiés soit le refroidissement du fluide à refroidir circulant dans le circuit fermé, soit le chauffage de l'air ambiant de l'habitacle.

De telles ressources mutualisées permettent de restreindre les besoins en énergie globaux de l'installation à l'entraînement du compresseur accessoire. De surcroît, les besoins en énergie du compresseur accessoire sont limités à production d'un flux d'air source à température et pression modérées. Le flux d'air source est exploité pour des alimentations sélectives du deuxième circuit d'air et de l'organe de ventilation, qui est choisi formé d'un ventilateur à rampe d'éjection exempté de ressources propres d'alimentation en énergie et dont le flux d'activation est issu du flux d'air source, et de préférence plus spécifiquement du flux d'air chaud.

Le flux d'air de chauffage est acheminé vers l'habitacle par l'intermédiaire de conduits s'étendant le long du fuselage de l'aéronef. De tels conduits s'étendent vers l'habitacle depuis l'échangeur de chaleur proche de l'organe à refroidir, boîte de transmission principale notamment à partir de laquelle est avantageusement entraîné le compresseur accessoire. La température de l'air de chauffage est modérée au regard des conditions de sécurité relatives à son acheminement le long du fuselage, et l'implantation sécurisée des conduits en est facilitée.

La pression de l'air de chauffage est elle aussi modérée, limitant les nuisances sonores induites lors de la détente du flux d'air de chauffage. Une telle détente est susceptible d'être provoquée à l'intérieur de l'habitacle sans être source de nuisances sonores significatives. Une telle détente est encore susceptible d'être provoquée à l'intérieur du deuxième circuit d'air préalablement à l'échappée du flux d'air de chauffage hors du deuxième circuit d'air vers l'intérieur de l'habitacle.

L'architecture de l'installation comporte un nombre limité de composants, et est facilement adaptable à un quelconque giravion parmi divers giravions de caractéristiques propres dont les besoins respectifs du système de refroidissement et du système de traitement thermique d'air sont susceptibles de varier significativement.

La vanne de distribution est plus particulièrement un organe de traitement thermique de fluides sélectivement entre un réchauffement de l'air ambiant de l'habitacle et un refroidissement du fluide à refroidir. La notion d'organe de traitement thermique propre à la vanne de distribution est à considérer au regard des apports en flux d'air source induits par le fonctionnement de la vanne de distribution. De tels apports en flux d'air source sont inversement proportionnels respectivement vers le deuxième circuit d'air et/ou vers le ventilateur à rampe d'éjection. Il est à considérer que la vanne de distribution est avantageusement participante à la fois des dits moyens de régulation du flux d'air de chauffage et de moyens de régulation de la température du fluide à refroidir.

La manoeuvre de la vanne de distribution est placée sous la dépendance de moyens de commande indifféremment à commande manuelle et/ou à commande automatisée.

La manoeuvre de la vanne de distribution est de préférence automatisée, en laissant une liberté d'intervention du pilote de l'aéronef, par l'intermédiaire d'une commande manuelle, sur la gestion du refroidissement de l'organe à refroidir et/ou du traitement thermique de l'air de l'habitacle. Il est à considérer que l'installation comprend de préférence à la fois une commande automatisée et une commande manuelle de la manoeuvre de la vanne de distribution, qui sont alternativement exploitées en donnant autorité à la commande manuelle.

Les moyens de commande manoeuvrent la vanne de distribution entre deux modes de fonctionnement de l'installation qui sont alternatifs ou inversement complémentaires. Une commande de la manoeuvre de la vanne de distribution induit selon le mode de fonctionnement une distribution en quantités respectives inversement proportionnelles du flux d'air source vers le ventilateur à rampe d'éjection et/ou vers le deuxième circuit d'air.

Un premier mode de fonctionnement correspond à un mode de traitement thermique de l'habitacle, suivant lequel une majeure quantité, voire la totalité, du flux d'air source est distribuée vers l'habitacle après chauffage par l'échangeur de chaleur.

Un deuxième mode correspond à un mode de refroidissement, suivant lequel une majeure quantité, voire la totalité, de flux d'air source est distribuée vers le ventilateur à rampe d'éjection, indifféremment avant ou de préférence spécifiquement après chauffage du flux d'air source par l'échangeur de chaleur.

La mise en oeuvre de moyens de commande automatisée de la manoeuvre de la vanne de distribution est notamment placée au moins sous la dépendance de moyens de mesure de la température du fluide à refroidir, de moyens de mesure de la température de l'air ambiant à l'intérieur de l'habitacle, voire encore de moyens de mesure de la température du flux d'air source.

L'échangeur de chaleur est notamment organisé en organe à double échanges thermiques. Un premier échange thermique est réalisé entre le fluide à refroidir et le flux d'air de refroidissement. Un deuxième échange thermique est réalisé entre le fluide à refroidir et le flux d'air source.

Plus particulièrement, ladite structure à échange thermique est en communication aéraulique avec une bouche d'admission d'air extérieur à partir duquel est issu le flux d'air de refroidissement. Le fluide à refroidir circule à travers l'échangeur de chaleur par l'intermédiaire d'un premier circuit interne qu'il intègre. La structure à échange thermique est traversée par un deuxième circuit interne intégré à l'échangeur de chaleur, comprenant un canal du premier circuit d'air acheminant le flux d'air source à travers la structure à échange thermique pour former le flux d'air chaud maintenu à l'état comprimé.

Selon une approche spécifique de la présente invention, l'installation est équipée d'un appareil à échange thermique structuré à partir du dit groupe d'organes communs. Un tel appareil à échange thermique comprend notamment un dit échangeur de chaleur muni de calories et d'un premier circuit interne de circulation d'un fluide à refroidir formé par le fluide acheminé par le premier circuit.

Un tel appareil à échange thermique présente la spécificité d'une organisation particulière des moyens de prélèvement de calories, associant :
-) un deuxième circuit interne de circulation d'un fluide caloporteur issu du flux d'air source généré par un compresseur, compresseur accessoire notamment, et
-) un dit ventilateur à rampe d'éjection muni de moyens d'admission d'un flux d'air d'activation issu du flux d'air source. Le flux d'air source est de préférence prélevé en sortie du dit deuxième circuit interne, sinon en amont de l'échangeur de chaleur dans le sens de circulation du flux d'air source dans le premier circuit d'air.

De préférence, les moyens d'admission du flux d'air d'activation comprennent une vanne d'admission régulée du flux d'air source, et préférentiellement du flux d'air chaud, vers le ventilateur à rampe d'éjection. La vanne d'admission est notamment formée par la dite vanne de distribution, la régulation de l'admission de l'air chaud vers le ventilateur à rampe d'éjection étant mise à profit pour exploiter au besoin le reliquat d'air chaud après alimentation du ventilateur à rampe d'éjection.

Dans sa généralité, le fluide caloporteur circulant à l'intérieur du premier circuit d'air est à l'état gazeux au plus tard en entrée du ventilateur à rampe d'éjection, où le fluide caloporteur à l'état gazeux forme le flux d'air d'activation. Le fluide caloporteur est notamment constitué d'un gaz, air notamment, qui est généré par un quelconque organe de mise en circulation du fluide caloporteur à l'intérieur d'un circuit.

Dans le cas spécifique d'application de l'appareil à échange thermique proposé par la présente invention, un tel organe de mise en circulation du fluide caloporteur est formé par le compresseur accessoire.

Le ventilateur à rampe d'éjection comprend avantageusement au moins un module muni d'au moins un éjecteur d'air. L'éjecteur d'air comporte notamment une bouche d'admission du flux d'air d'activation et au moins une première rampe de guidage du flux d'air d'activation. Le guidage du flux d'air d'activation le long de la première rampe provoque par effet Coanda un entraînement le long d'au moins une deuxième rampe d'un flux d'air extérieur, dont est issu le dit flux de refroidissement.

Selon une forme de réalisation, l'éjecteur d'air est de conformation globale conique, les dites rampes étant respectivement formées par des parois concentriques à surface de révolution conique. Selon une autre forme de réalisation, l'éjecteur d'air est de conformation globale allongée, les dites rampes s'étendant sensiblement dans des plans parallèles.

Selon une forme particulière de réalisation, le ventilateur à rampe d'éjection comprend une pluralité de modules indépendants juxtaposés. Chaque module comporte un boîtier logeant au moins un éjecteur d'air allongé, sinon logeant une pluralité d'éjecteurs d'air allongés montés parallèles à l'intérieur du boîtier. Un tel agencement du ventilateur à rampe d'éjection permet son adaptation aisée à une structure à échange thermique de dimensions quelconques, à partir d'une mise en juxtaposition des modules en nombre correspondant. Ces dispositions facilitent l'adaptation de la capacité de l'échangeur de chaleur selon les besoins en refroidissement du fluide à refroidir circulant dans le circuit fermé, et plus particulièrement selon la taille de la structure à échange thermique déterminée par les besoins propres de l'aéronef.

L'entrée d'air du compresseur accessoire est notamment en communication aéraulique avec un troisième circuit d'air que comporte le circuit ouvert. Selon une forme préférée de réalisation, le troisième circuit d'air comporte une vanne de sélection d'aspiration d'un flux d'air d'admission par le compresseur accessoire. Ladite vanne de sélection distribue vers le compresseur accessoire, en quantité inversement proportionnelle, un flux d'air ambiant prélevé dans l'habitacle et/ou un flux d'air extérieur à l'habitacle.

Il est à considérer que la vanne de sélection participe avantageusement des dits moyens de régulation du flux d'air de chauffage, la mise en oeuvre de la vanne de sélection étant placée sous la dépendance des dits moyens de commande.

Le compresseur accessoire est de préférence entraîné à partir de la boîte de transmission principale que comprend le groupe de motorisation principal équipant l'aéronef, giravion notamment.

Subsidiairement, le circuit ouvert comprend un circuit de ventilation comportant une admission d'air frais extérieur vers l'habitacle.

Subsidiairement encore, le système de traitement thermique de l'habitacle comprend au moins un module autonome de climatisation de l'habitacle, par prélèvement et refroidissement de l'air ambiant de l'habitacle. Un tel module autonome est structurellement réduit à la fonction de climatisation, et intègre par exemple un ou plusieurs organes thermoélectriques à effet Peltier, générant de l'air froid à partir d'un flux d'air extérieur et/ou à partir de l'air ambiant prélevé à l'intérieur de l'habitacle.

Le circuit de ventilation et le module autonome de climatisation sont dissociés des moyens exploités pour générer le flux d'air de chauffage. Le circuit de ventilation et le module autonome de climatisation sont plus particulièrement indépendants du premier circuit d'air, du deuxième circuit d'air et du troisième circuit d'air. Le circuit de ventilation et les moyens de rafraîchissement de l'habitacle, formés d'un ou de plusieurs de dits modules autonomes de climatisation, peuvent être librement individuellement implantés sur l'aéronef.

La présente invention a aussi pour objet un aéronef, giravion notamment, équipé d'une installation à traitement thermique de fluide telle qu'elle vient d'être décrite.

Des exemples de réalisation de la présente invention vont être décrits en relation avec les figures des planches annexées, dans lesquelles :
- la fig.1 est une illustration schématique d'une installation à traitement thermique de fluide pour aéronef, giravion notamment, selon un exemple préféré de réalisation de la présente invention.
- les fig.2 à fig.4 sont des illustrations d'un appareil à échange thermique que comprend l'installation représentée sur la fig.1, selon diverses formes respectives de réalisation.

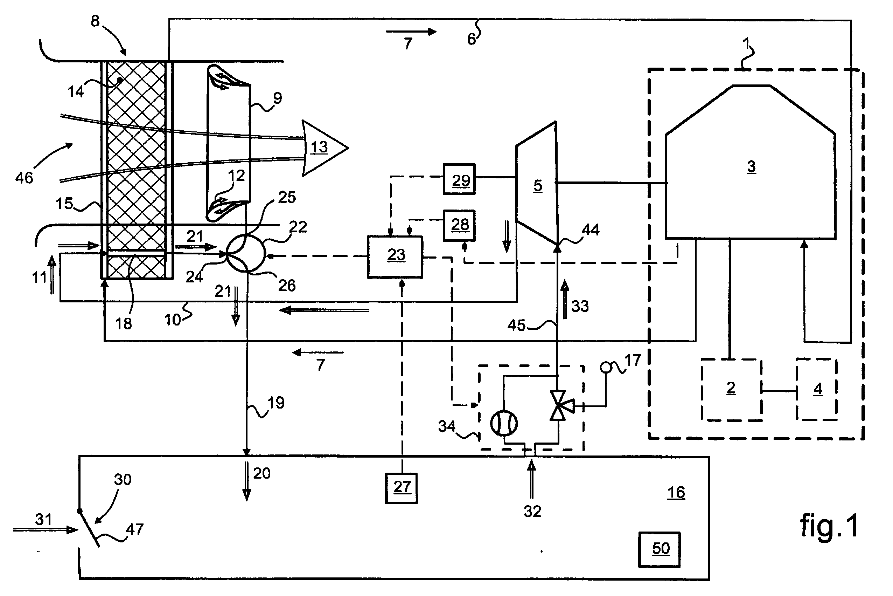

Sur la fig.1, un aéronef et plus spécifiquement un giravion, est équipé d'un groupe de motorisation principal 1 d'entraînement d'au moins un rotor, et est équipé d'une installation à traitement thermique de fluide. Le groupe de motorisation principal 1 comprend au moins un organe moteur principal 2, sur lequel est en prise une boîte de transmission principale 3. Sur l'exemple de réalisation illustré, l'organe moteur principal 2 est un turbomoteur mettant en oeuvre un compresseur principal 4.

Un compresseur accessoire 5 est entraîné à partir de la boîte de transmission principale 3, et comporte une entrée d'air 44 en communication aéraulique avec un troisième circuit d'air 45. Ce compresseur accessoire 5 est un organe produisant l'énergie nécessaire au fonctionnement de la globalité de l'installation à traitement thermique de fluide équipant le giravion.

Le giravion est équipé d'au moins un système de refroidissement d'au moins un organe à refroidir, dont la boîte de transmission principale 3. Le système de refroidissement comprend :
-) un circuit fermé 6 de circulation d'un fluide à refroidir 7 intégrant au moins un échangeur de chaleur 8 équipé d'un ventilateur à rampe d'éjection 9,
-) un premier circuit d'air 10 d'acheminement d'un flux d'air source 11 généré par le compresseur accessoire 5, à partir duquel est issu un flux d'air d'activation 12 du ventilateur à rampe d'éjection 9. Le flux d'air d'activation 12 induit la production d'un flux d'air de refroidissement 13 traversant une structure à échange thermique 14 que comporte l'échangeur de chaleur 8. L'échangeur de chaleur 8 intègre un premier circuit interne 15 à travers lequel est acheminé le fluide à refroidir 7. L'échangeur de chaleur 8 comporte une bouche d'admission 46 d'air extérieur à partir duquel est issu le flux d'air de refroidissement. La bouche d'admission 46 est en communication aéraulique avec la structure à échange thermique 14.

Le giravion est aussi équipé d'au moins un système de traitement thermique d'un habitacle 16, comprenant :
a) le compresseur accessoire 5 alimenté en un flux d'air prélevé 33. Le flux d'air prélevé 33 est sélectivement issu à partir de l'air ambiant 32 de l'habitacle 16 et/ou à partir d'une prise d'air extérieur 17 à l'habitacle, par l'intermédiaire d'une vanne de sélection 34 interposée sur le troisième circuit d'air 45.
b) le premier circuit d'air 10 et l'échangeur de chaleur 8 traversé par un deuxième circuit interne intégré à l'échangeur. Ce deuxième circuit interne comprend notamment un canal 18 d'acheminement du flux d'air source 11.
c) un deuxième circuit d'air 19 d'acheminement d'un air de chauffage 20 de l'habitacle 16. L'air de chauffage 20 est issu d'un air chaud 21 obtenu par chauffage au moyen de l'échangeur de chaleur 8 du flux d'air source 11.

Le giravion est encore équipé d'une vanne de distribution 22, dont la manoeuvre est placée sous la dépendance de moyens de commande 23. On relèvera que la manoeuvre de la vanne de sélection 34 est de préférence aussi placée sous la dépendance des moyens de commande 23.

La vanne de distribution 22 répartit sélectivement le flux d'air source 11, et plus spécifiquement le flux d'air chaud 21, vers le ventilateur à rampe d'éjection 9 et/ou vers le deuxième circuit d'air 19. On notera que le système de refroidissement et le système de traitement thermique sont associés entre eux et comprennent conjointement la vanne de distribution 22, le compresseur accessoire 5 et l'échangeur de chaleur 8 équipé du ventilateur à rampe d'éjection 9. La vanne de distribution 22 répartit des admissions inversement proportionnelles du flux d'air source 11, flux d'air chaud 21 notamment, vers le ventilateur à rampe d'éjection 9 et vers le dit deuxième circuit d'air 19. Le flux d'air source 11 est admis vers le deuxième circuit d'air 19 après traitement thermique du flux d'air source 11 par l'échangeur de chaleur 8, indépendamment des modalités choisies de prélèvement sur le premier circuit d'air 6 du flux d'air source 11 à partir duquel est issu le flux d'air d'activation 12.

La vanne de distribution comporte plus particulièrement :
-) une bouche d'entrée 24 du flux d'air chaud 21 à l'état comprimé,
-) une première bouche de sortie 25 de l'air chaud 21 à l'état comprimé vers le ventilateur à rampe d'éjection 9, à l'intérieur duquel l'air chaud 21 détendu forme le flux d'air d'activation 12,
-) une deuxième bouche de sortie 26 de l'air chaud 21 à l'état comprimé vers le deuxième circuit d'air 19, à l'issue duquel l'air chaud détendu forme le flux d'air de chauffage 20.

Les moyens de commande 23 sont de préférence des moyens de commande automatisés, dont la mise en oeuvre est placée sous la dépendance de divers moyens de mesure de température. Ces moyens de mesure comprennent notamment :
-) des moyens de mesure 27 de la température de l'air ambiant à l'intérieur de l'habitacle 16,
-) des moyens de mesure 28 de la température du fluide à refroidir 7. La température du fluide à refroidir 7 est de préférence mesurée au plus proche de l'organe à refroidir, et notamment à l'intérieur de la boîte de transmission principale 3.
-) des moyens de mesure 29 de la température du flux d'air source 11.

Subsidiairement, le giravion est équipé d'un circuit de ventilation 30 et d'un ou de plusieurs modules autonomes 50 de climatisation de l'air ambiant de l'habitacle. Le circuit de ventilation 30 est notamment formé d'une prise d'air frais extérieur 31, équipée d'un clapet 47 à manoeuvre automatique.

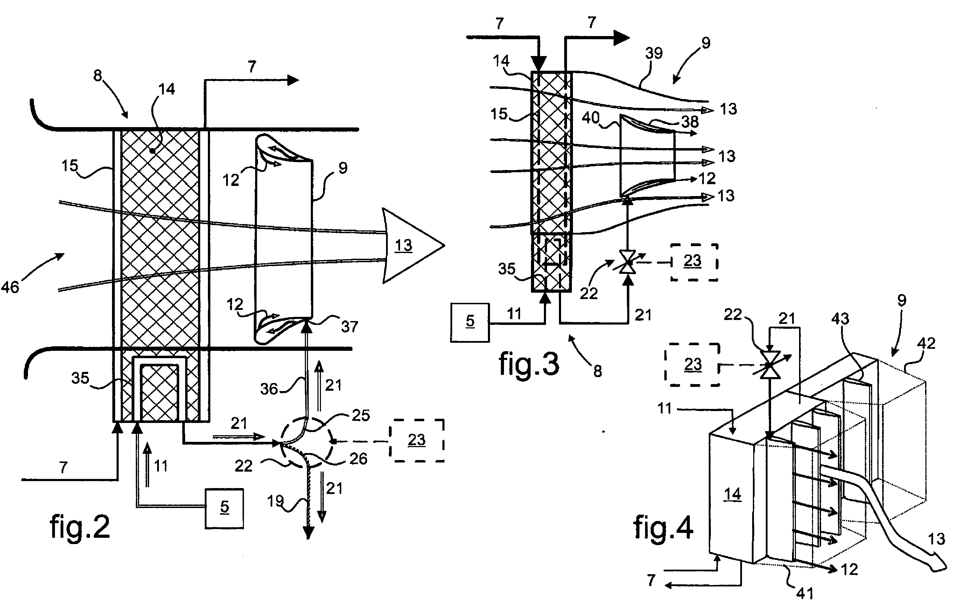

Sur les fig.2 à fig.4, l'installation comporte un appareil à échange thermique spécifique. Cet appareil à échange thermique comprend un dit échangeur de chaleur 8 à double échange de chaleur entre un dit fluide à refroidir 7 circulant dans un dit premier circuit interne 15, et deux flux d'air distincts 13 et 11.

Un premier flux d'air est un flux d'air de refroidissement 13 traversant une dite structure à échange thermique 14 intégrée à l'échangeur de chaleur 8. Un deuxième flux d'air 11 est un flux d'air source 11 à réchauffer circulant à l'intérieur d'un deuxième circuit interne 35 intégré à l'échangeur de chaleur 8. Le réchauffement du deuxième flux d'air source 11 est obtenu par prélèvement de calories à partir de la structure à échange thermique 14, elle-même portée à température par le passage du fluide à refroidir 7 à l'intérieur de l'échangeur de chaleur 8 par l'intermédiaire du premier circuit interne 15.

L'échangeur de chaleur 8 intègre la structure à échange thermique 14, le premier circuit interne 15 de circulation du fluide à refroidir 7 et un deuxième circuit interne 35 de circulation d'un fluide caloporteur. Le dit fluide caloporteur est notamment formé du flux d'air source 11 généré par un compresseur, compresseur accessoire 5 plus particulièrement, ou par tout autre organe apte à induire une circulation d'un flux d'air à l'intérieur d'un circuit. L'échangeur de chaleur 8 est équipé d'un ventilateur à rampe d'éjection 9.

Le flux d'air source 11 est admis à l'intérieur du deuxième circuit interne 35, pour être réchauffé par l'intermédiaire de la structure à échange thermique 14 à partir des calories prélevées du fluide à refroidir 7. Le flux d'air chaud 21 en sortie de l'échangeur de chaleur 8 est acheminé par un circuit d'admission 36 du fluide chaud 21 en entrée 37 du ventilateur à rampe d'éjection 9, pour former le flux d'air d'activation 12.

Il est à considérer que la fraction du flux d'air source 11 à partir de laquelle est formé le flux d'air d'activation 12, est susceptible d'être prélevé en amont du passage du flux d'air source 11 à travers l'échangeur de chaleur 8. La fraction complémentaire du flux d'air source 11 est acheminée à travers l'échangeur de chaleur 8 pour son refroidissement, en coopération avec le flux d'air de refroidissement 13 généré par le ventilateur à rampe d'éjection 9. Ladite fraction complémentaire du flux d'air source 11 forme un flux d'air chaud 21 susceptible d'être avantageusement exploitée comme moyens de chauffage.

Selon une approche générale d'un tel appareil à échange thermique, le fluide caloporteur 11 est susceptible d'être un fluide quelconque entraîné à l'intérieur du deuxième circuit interne 15 à partir d'un quelconque appareil moteur 5, compresseur, pompe ou organe analogue d'entraînement d'un fluide à l'état gazeux notamment. Le circuit d'admission 36 est de préférence équipé d'un organe de régulation 22 de la quantité de fluide exploitée pour former le flux d'air d'activation 12, dont la mise en oeuvre est de préférence placée sous la dépendance de moyens de commande 23.

L'organe de régulation 22 est susceptible de comporter plusieurs voies de sortie du fluide chaud 21 admis, dont une voie 25 dédiée à l'évacuation du fluide chaud 21 vers le ventilateur à rampe d'éjection 9, et au moins une voie 26 dédiée à l'évacuation du fluide chaud 21 vers un quelconque circuit 19 d'exploitation du fluide chaud 21 tel que représenté sur la fig.2.

Sur la fig.3, le ventilateur à rampe d'éjection 9 comporte un éjecteur d'air 40 de conformation générale conique. Le ventilateur à rampe d'éjection 9 comporte deux parois concentriques, ménageant respectivement une première rampe 38 de guidage du flux d'air d'activation 12 et une deuxième rampe 39 de guidage du flux d'air de refroidissement 13.

Sur la fig.4, le ventilateur à rampe d'éjection 9 est composé de plusieurs modules 41,42 juxtaposés. Chaque module 41,42 est individuellement pourvu d'un ou de plusieurs éjecteurs d'air 43. Les éjecteurs d'air 43 sont de conformation allongés en étant orientés parallèlement les uns aux autres.

## Revendications

1. Installation à traitement thermique de fluide pour aéronef, ladite installation comprenant au moins un système de refroidissement d'au moins un organe à refroidir (3) et au moins un système de traitement thermique de l'air d'un habitacle (16) de l'aéronef,
-) le système de refroidissement comprenant un circuit fermé (6) de circulation d'un fluide à refroidir (7) entre l'organe à refroidir (3) et au moins un échangeur de chaleur (8) équipé d'un organe de ventilation (9), l'échangeur de chaleur (8) étant interposé sur le circuit fermé (6) par l'intermédiaire d'un circuit interne (15) de circulation du fluide à refroidir (7), et comportant une structure à échange thermique (14) à travers laquelle circule un flux d'air de refroidissement (13) généré par l'organe de ventilation (9),
*) le système de traitement thermique d'air comprenant des moyens de régulation d'un flux d'air de chauffage (20) admis vers l'habitacle (16), et un circuit ouvert d'acheminement d'une pluralité de flux d'air, le circuit ouvert comportant un premier circuit d'air (10) d'acheminement d'un flux d'air source (11) généré par un compresseur (5) vers au moins un appareil de traitement thermique et un deuxième circuit d'air (19) d'acheminement vers l'habitacle (16) du dit flux d'air de chauffage (20) issu du traitement thermique du flux d'air source (11),
le système de refroidissement et le système de traitement thermique comprenant un groupe d'organes communs, dont au moins :
a) le dit compresseur (5) générateur d'un flux d'air source (11) à pression et température modérées, le compresseur étant un compresseur accessoire (5) pourvu d'une entrée d'air (44) et entraîné à partir d'un organe moteur (2),
b) le dit échangeur de chaleur (8), formant des moyens coopérant de refroidissement du fluide à refroidir (7) et de chauffage du flux d'air source (11) en provenance du compresseur accessoire (5), le chauffage du flux d'air source (11) produisant un flux d'air chaud (21) par prélèvement de calories participant du refroidissement de la structure à échange thermique (14)
**caractérisée en ce que** le dit organe de ventilation est un ventilateur à rampe d'éjection (9) générateur du flux d'air de refroidissement (13) à partir d'un flux d'air d'activation (12), et **en ce que** le groupe d'organes communs comporte :
c) une vanne de distribution (22) du dit flux d'air source (11) sélectivement vers le ventilateur à rampe d'éjection (9) en formant le flux d'air d'activation (12) et/ou vers l'habitacle (16) en formant le dit flux d'air de chauffage (20) issu du flux d'air chaud (21).

2. Installation selon la revendication 1,
**caractérisée en ce que** la vanne de distribution (22) est placée sur le premier circuit d'air (6) en sortie de l'échangeur de chaleur (8), le flux d'air d'activation (12) étant plus spécifiquement issu du flux d'air chaud (21) formé par le flux d'air source (11) chauffé par l'échangeur de chaleur (8).

3. Installation selon l'une quelconque des revendications précédentes,
**caractérisée en ce que** la vanne de distribution (22) est un organe de traitement thermique de fluides sélectivement entre un réchauffement de l'air ambiant (32) de l'habitacle (16) et un refroidissement du fluide à refroidir (7), par apports inversement proportionnels du flux d'air source (11) respectivement vers le deuxième circuit d'air (19) et/ou vers le ventilateur à rampe d'éjection (9).

4. Installation selon l'une quelconque des revendications précédentes,
**caractérisée en ce que** la manoeuvre de la vanne de distribution (22) est placée sous la dépendance de moyens de commande indifféremment à commande manuelle et/ou à commande automatisée, entre un mode de traitement thermique de l'habitacle (16) suivant lequel une majeure quantité de flux d'air source (11) est distribuée vers l'habitacle (16) après chauffage par l'échangeur de chaleur (8) et un mode de refroidissement suivant lequel une majeure quantité de flux d'air source (11) est distribuée vers le ventilateur à rampe d'éjection (9).

5. Installation selon la revendication 4,
**caractérisée en ce que** la mise en oeuvre de moyens de commande (23) automatisée de la manoeuvre de la vanne de distribution (22) est placée au moins sous la dépendance de moyens de mesure (28) de la température du fluide à refroidir (7), de moyens de mesure (27) de la température de l'air ambiant (32) à l'intérieur de l'habitacle (16), et de moyens de mesure (29) de la température du flux d'air source (11).

6. Installation selon l'une quelconque des revendications précédentes,
**caractérisée en ce que** l'échangeur de chaleur (8) est organisé en organe à double échanges thermiques, dont un échange thermique entre le fluide à refroidir (7) et le flux d'air de refroidissement (13), et dont un échange thermique entre le fluide à refroidir (7) et le flux d'air source (11).

7. Installation selon la revendication 6,
**caractérisée en ce que** ladite structure à échange thermique (14) est en communication aéraulique avec une bouche d'admission (46) d'air extérieur à partir duquel est issu le flux d'air de refroidissement (13), et est traversée par un canal (18) du premier circuit d'air (10) acheminant le flux d'air source (11) à travers le structure à échange thermique (14) pour former le flux d'air chaud (21) maintenu à l'état comprimé.

8. Installation selon l'une quelconque des revendications précédentes,
**caractérisée en ce que** l'installation est équipée d'un appareil à échange thermique comprenant un dit échangeur de chaleur (8) muni d'une dite structure à échange thermique (14), de moyens de prélèvement de calories et d'un premier circuit interne (15) de circulation d'un fluide à refroidir (7), les moyens de prélèvement de calories associant :
-) un deuxième circuit interne (35) de circulation d'un fluide caloporteur issu du flux d'air source (11), et
-) un dit ventilateur à rampe d'éjection (9) muni de moyens d'admission (22,36) d'un flux d'air d'activation (12) issu du flux d'air source (11).

9. Installation selon la revendication 8,
**caractérisée en ce que** les moyens d'admission du flux d'air d'activation comprennent une vanne d'admission régulée du flux d'air source (11) vers le ventilateur à rampe d'éjection (9), la vanne d'admission régulée étant formée par la dite vanne de distribution (22).

10. Installation selon l'une quelconque des revendications précédentes,
**caractérisée en ce que** le ventilateur à rampe d'éjection (9) comprend au moins un module (41,42) muni d'au moins un éjecteur d'air (40,43) de conformation globale indifféremment conique ou allongée.

11. Installation selon la revendication 10,
**caractérisée en ce que** le ventilateur à rampe d'éjection (9) comprend une pluralité de modules (41,42) indépendants juxtaposés, chaque module (41,42) comportant un boîtier logeant au moins un éjecteur d'air allongé (43) sinon logeant une pluralité d'éjecteurs d'air allongés (43) montés parallèles à l'intérieur du boîtier.

12. Installation selon l'une quelconque des revendications précédentes,
**caractérisée en ce que** l'entrée d'air (44) du compresseur accessoire (5) est en communication aéraulique avec un troisième circuit d'air (45) que comporte le circuit ouvert, le troisième circuit d'air (45) comportant une vanne de sélection (34) d'aspiration d'un flux d'air d'admission (33) par le compresseur (5), ladite vanne de sélection (34) distribuant vers le compresseur accessoire (5) en quantité inversement proportionnelle un flux d'air ambiant (32) prélevé dans l'habitacle (16) et/ou un flux d'air extérieur (17) à l'habitacle (16).

13. Installation selon la revendication 12,
**caractérisée en ce que** la vanne de sélection (34) participe des dits moyens de régulation du flux d'air de chauffage, la mise en oeuvre de la vanne de sélection (34) étant placée sous la dépendance des moyens de commande (23).

14. Installation selon l'une quelconque des revendications précédentes,
**caractérisée en ce que** le compresseur accessoire (5) est entraîné à partir d'une boîte de transmission principale (3) que comprend un groupe de motorisation principal (1) équipant l'aéronef.

15. Aéronef équipé d'une installation selon l'une quelconque des revendications précédentes.

16. Aéronef de type giravion selon la revendication 15, **caractérisé en ce que** le giravion est équipé :
*) d'un groupe de motorisation principal (1) d'entraînement d'au moins un rotor, comprenant au moins un organe moteur (2) sur lequel est en prise une boîte de transmission principale (3) à partir de laquelle est entraîné un dit compresseur accessoire (5),
*) d'au moins un dit système de refroidissement d'au moins un organe à refroidir, dont la boîte de transmission principale (3), comprenant :
-) un dit circuit fermé (6) de circulation d'un fluide à refroidir (7) intégrant au moins un dit échangeur de chaleur (8) équipé d'un dit ventilateur à rampe d'éjection (9),
-) un dit premier circuit d'air (10) d'acheminement d'un flux d'air source (11) généré par le compresseur accessoire (5) à partir duquel est issu un dit flux d'air d'activation (12),
*) d'au moins un dit système de traitement thermique d'un habitacle, comprenant :
a) le dit compresseur accessoire (5) alimenté en air sélectivement à partir de l'air ambiant (32) de l'habitacle (16) et/ou à partir d'une prise d'air extérieur (17) à l'habitacle (16) par l'intermédiaire d'une dite vanne de sélection (34),
b) le dit premier circuit d'air (10) et le dit échangeur de chaleur (8) traversé par un dit canal (18) d'acheminement du flux d'air source (11),
c) un dit deuxième circuit d'air (19) d'acheminement de l'air de chauffage (20) issu d'un air chaud (21) obtenu par chauffage au moyen du dit échangeur de chaleur (8) du flux d'air source (11),
*) d'une dite vanne de distribution (22) sélective du dit flux d'air source (11), que comprennent un dit système de refroidissement et un dit système de traitement thermique associés entre eux, la vanne de distribution (22) répartissant des admissions inversement proportionnelles du flux d'air source (11) vers le dit ventilateur à rampe d'éjection (9) et vers le dit deuxième circuit d'air (19) après traitement thermique du flux d'air source (11) par l'échangeur de chaleur (8).

## Patentansprüche

1. Installation zur thermischen Behandlung eines Fluids für ein Luftfahrzeug, wobei die Installation mindestens ein Kühlsystem mindestens eines zu kühlenden Elements (3) und mindestens ein System zur thermischen Behandlung einer Kabine (16) des Luftfahrzeugs aufweist,
-) wobei das Kühlsystem einen geschlossenen Kreislauf (6) für die Zirkulation eines zu kühlenden Fluids (7) zwischen dem zu kühlenden Element (3) und mindestens einem Wärmetauscher (8) aufweist, der mit einem Belüftungselement (9) ausgerüstet ist, wobei der Wärmetauscher (8) in dem geschlossenen Kreislauf (6) über einen internen Kreislauf (15) zur Zirkulation des zu kühlenden Fluids (7) angeordnet ist und eine Wärmetauscherstruktur (14) aufweist, durch die ein Kühlluftstrom (13) strömt, der durch das Belüftungselement (9) erzeugt wird,
*) das System zur thermischen Behandlung von Luft Mittel zur Regulierung eines Heizluftstroms (20), der der Kabine (16) zugeführt wird, und einen offenen Kreislauf zur Lenkung einer Mehrzahl von Luftströmungen aufweist, wobei der offene Kreislauf einen ersten Kreislauf (10) zur Lenkung eines von einem Kompressor (5) erzeugten Luftstroms von einer Quelle (11) zu mindestens einem thermischen Behandlungsgerät, und einen zweiten Luftkreislauf (19) zur Lenkung des Heizluftstroms (20, der aus der thermischen Behandlung des Quellenluftstroms (11) hervorgeht, zur Kabine (16), aufweist,
wobei das Kühlsystem und das thermische Behandlungssystem eine Gruppe von gemeinsamen Elementen aufweisen, zu denen mindestens gehören:
a) der Kompressor (5), der einen Quellenluftstrom (11) mit gemäßigtem Druck und gemäßigter Temperatur erzeugt, wobei der Kompressor ein zusätzlicher Kompressor (5) ist, der mit einem Lufteinlass (44) versehen ist, und von einem Antriebsorgan (2) angetrieben wird,
b) der Wärmetauscher (8), der Mittel bildet, die zur Kühlung des zu kühlenden Fluids (7) und zur Erwärmung des Quellenluftstroms (11), der von dem zusätzlichen Kompressor (5) stammt, zusammenwirken, wobei die Heizung des Quellenluftstroms (11) einen warmen Luftstrom (21) erzeugt durch Entnahme von Wärme, die an der Kühlung der Wärmetauscherstruktur (14) teilnimmt,
dadurch gekenntzeichnet, dass das Belüftungselement ein Lüfter mit einer Ausstoßrampe (9) ist, der einen Kühlluftstrom (13) ausgehend von einem Aktivierungsluftstrom (12) erzeugt, und dadurch, dass die Gruppe gemeinsamer Elemente aufweist:
c) ein Ventil (22) zur Verteilung des Quellenluftstroms (11) wahlweise zu dem Lüfter mit Ausstoßrampe (9), wodurch der Aktivierungsluftstrom (12) gebildet wird, und/oder zu der Kabine (16), wodurch der Heizluftstrom (20) gebildet wird, der aus dem Warmluftstrom (21) hervorgeht.

2. Installation nach Anspruch 1,
**dadurch gekennzeichnet, dass** das Verteilerventil (22) in dem ersten Luftkreislauf (6) am Ausgang des Wärmetauschers (8) angeordnet ist, wobei der Aktivierungsluftstrom (12) genauer gesagt aus dem Warmluftstrom (21) hervorgeht, der von dem durch den Wärmetauscher (8) geheizten Quellenluftstrom (11) gebildet wird.

3. Installation nach einem der vorstehenden Ansprüche,
**dadurch gekennzeichnet, dass** das Verteilerventil (22) ein Element zur thermischen Behandlung von Fluiden ist, wahlweise zur Erwärmung der Umgebungsluft (32) der Kabine (16) oder zur Kühlung des zu kühlenden Fluids (7) durch umgekehrt proportionale Zuführung des jeweiligen Quellenluftstroms (11) zu dem zweiten Luftkreislauf (19) und/oder zu dem Lüfter mit Ausstoßrampe (9).

4. Installation nach einem der vorstehenden Ansprüche,
**dadurch gekennzeichnet, dass** die Betätigung des Verteilungsventils (22) abhängig von Steuermitteln ist, unabhängig davon, ob die Steuerung eine manuelle Steuerung und/oder eine automatisierte Steuerung ist, zwischen einem thermischen Behandlungsmodus der Kabine (16), bei dem eine größere Menge des Quellenluftstroms (11) nach Aufheizung durch den Wärmetauscher (8) zur Kabine (16) geleitet wird, und einem Kühlmodus, bei dem eine größere Menge des Quellenluftstroms (11) auf den Lüfter mit Ausstoßrampe (9) verteilt wird.

5. Installation nach Anspruch 4,
**dadurch gekennzeichnet, dass** der Betrieb der automatisierten Steuermittel (23) zur Betätigung des Verteilerventils (22) mindestens abhängig gemacht wird von Mitteln (28) zur Messung der Temperatur des zu kühlenden Fluids (7), von Mitteln (27) zur Messung der Temperatur der Umgebungsluft (32) im Inneren der Kabine (16), und von Mitteln (29) zur Messung der Temperatur des Quellenluftstroms (11).

6. Installation nach einem der vorstehenden Ansprüche,
**dadurch gekennzeichnet, dass** der Wärmetauscher (8) organisiert ist als ein Element mit doppeltem Wärmeaustausch, wobei ein Wärmeaustausch zwischen dem zu kühlenden Fluid (7) und dem Kühlluftstrom (13) und ein Wärmeaustausch zwischen dem zu kühlenden Fluid (7) und dem Quellenluftstrom (11) stattfindet.

7. Installation nach Anspruch 6,
**dadurch gekennzeichnet, dass** die Wärmetauscherstruktur (14) in lufttechnischer Verbindung mit einer Zuführöffnung (46) für Außenluft steht, wovon ausgehend der Kühlungsluftstrom (13) hervorgeht, und wobei die Struktur von einem Kanal (18) des ersten Luftkreislaufs (10) durchquert wird, der den Quellenluftstrom (11) durch die Wärmetauscherstruktur (14) lenkt, um den Warmluftstrom (21) zu bilden, der in einem komprimierten Zustand gehalten wird.

8. Installation nach einem der vorstehenden Ansprüche,
**dadurch gekennzeichnet, dass** die Installation mit einem Wärmetauschergerät ausgerüstet ist, das einen Wärmetauscher (8) aufweist, der mit einer Wärmetauscherstruktur (14) versehen ist, mit Mitteln zur Entnahme von Wärme, und mit einem inneren Kreislauf (15) zur Zirkulation eines zu kühlenden Fluids (7), wobei die Wärmeentnahmemittel vereinigen:
-) einen zweiten inneren Kreislauf (35) zur Zirkulation eines wärmeleitenden Fluids, welches aus dem Quellenluftstrom (11) stammt, und
-) einem Lüfter mit Ausstoßrampe (9), der mit Zugangsmitteln (22, 36) für einen Aktivierungsluftstrom (12), der von dem Quellenluftstrom (11) stammt, versehen ist.

9. Installation nach Anspruch 8,
**dadurch gekennzeichnet, dass** die Zufuhrmittel des Aktivierungsluftstroms ein Ventil zur regulierten Zufuhr des Quellenluftstroms (11) zu dem Lüfter mit Ausstoßrampe (9) aufweisen, wobei das Ventil zur regulierten Zufuhr von dem Verteilungsventil (22) gebildet wird.

10. Installation nach einem der vorstehenden Ansprüche,
**dadurch gekennzeichnet, dass** der Lüfter mit Ausstoßrampe (9) mindestens ein Modul (41, 42) aufweist, das mit mindestens einem Luftausstoßer (40, 43) versehen ist, der insgesamt konisch oder länglich gestaltet sein kann.

11. Installation nach Anspruch 10,
dadurch gekenntzeichnet, dass der Lüfter mit Ausstoßrampe (9) eine Mehrzahl von unabhängigen, benachbart angeordneten Modulen (41, 42) aufweist, wobei jedes Modul (41, 42) ein Gehäuse aufweist, das mindestens einen länglichen Luftausstoßer (43) aufnimmt, oder eine Mehrzahl von länglichen Luftausstoßern (43) aufnimmt, die parallel zueinander im Inneren des Gehäuses angeordnet sind.

12. Installation nach einem der vorstehenden Ansprüche,
**dadurch gekennzeichnet, dass** der Lufteinlass (44) des zusätzlichen Kompressors (5) in lufttechnischer Verbindung mit einem dritten Luftkreislauf (45) steht, der den offenen Kreislauf aufweist, wobei der dritte Luftkreislauf (45) ein Auswahlventil (34) zur Ansaugung eines Zufuhrluftstroms (33) durch den Kompressor (5) aufweist, wobei das Auswahlventil (34) einen Umgebungsluftstrom (32), der der Kabine (16) entnommen wurde, und/oder einen Luftstrom (17) von außerhalb der Kabine (16) an den zusätzlichen Kompressor (5) in umgekehrt proportionaler Menge verteilt.

13. Installation nach Anspruch 12,
**dadurch gekennzeichnet, dass** das Auswahlventil (34) zu den Mitteln zur Regulierung des Heizluftstroms gehört, wobei der Betrieb des Auswahlventils (34) von Steuermitteln (23) gesteuert wird.

14. Installation nach einem der vorstehenden Ansprüche,
**dadurch gekennzeichnet, dass** der zusätzliche Kompressor (5) ausgehend von einem Hauptgetriebe (3) angetrieben wird, das eine Hauptantriebseinheit (1) aufweist, mit der das Luftfahrzeug ausgerüstet ist.

15. Luftfahrzeug, ausgerüstet mit einer Installation nach einem der vorstehenden Ansprüche.

16. Luftfahrzeug vom Typ Drehflügelflugzeug nach Anspruch 15, **dadurch gekennzeichnet, dass** das Drehflügelflugzeug ausgerüstet ist mit:
*) einer Hauptantriebseinheit (1) zum Antrieb mindestens eines Rotors mit mindestens einem Antriebsorgan (2), mit dem ein Hauptgetriebe (3) in Eingriff steht, von dem ausgehend ein zusätzlicher Kompressor (5) angetrieben wird,
*) mindestens einem Kühlsystem für mindestens ein zu kühlendes Element, zu dem das Hauptgetriebe (3) gehört, mit:
-) einem geschlossenen Kreislauf (6) zur Zirkulation eines zu kühlenden Fluids, welcher mindestens einen Wärmetauscher (8) einschließt, der mit einem Lüfter mit Ausstoßrampe (9) versehen ist,
-) einem ersten Luftkreislauf (10) zur Lenkung eines Quellenluftstroms (11), der von dem zusätzlichen Kompressor (5) erzeugt wird, aus dem ein Aktivierungsluftstrom (12) hervorgeht,
*) mindestens einem thermisches Behandlungssystem einer Kabine, das aufweist:
a) den zusätzlichen Kompressor (5), der wahlweise mit Luft versorgt wird ausgehend von der Umgebungsluft (32) der Kabine (16) und/oder ausgehend von einer Luftentnahme (17) außerhalb der Kabine (16) über ein Auswahlventil (34),
b) den ersten Luftkreislauf (10) und den Wärmetauscher (8), die von einem Lenkungskanal (18) des Quellenluftstroms (11) durchquert werden,
c) einen zweiten Luftkreislauf (19) zur Lenkung von Heizungsluft (20), die aus warmer Luft (21) hervorgeht, die durch eine Aufheizung des Quellenluftstroms (11) mit dem Wärmetauscher (8) erhalten wird,
*) einem Ventil (22) zur selektiven Verteilung des Quellenluftstroms (11), den ein Kühlsystem und ein thermisches Behandlungssystem aufweisen, die miteinander verbunden sind, wobei das Verteilungsventil (22) die Zuführung des Quellenluftstroms (11) zu dem Lüfter mit Ausstoßrampe (9) und zu dem zweiten Luftkreislauf (19) nach einer thermischen Behandlung des Quellenluftstroms (11) durch den Wärmetauscher (8) umgekehrt proportional verteilt.

## Claims

1. Fluid thermal treatment installation for aircraft, said installation comprising at least one cooling system for cooling at least one member to be cooled (3) and at least one thermal treatment system for thermal treatment of the air of a cabin (16) of the aircraft,
-) the cooling system comprising a closed circuit (6) for circulating a fluid to be cooled (7) between the member to be cooled (3) and at least one heat exchanger (8) equipped with a ventilation member (9), the heat exchanger (8) being interposed on the closed circuit (6) via an internal circuit (15) for circulating the fluid to be cooled (7), and comprising a thermal exchange structure (14) through which circulates a cooling air stream (13) generated by the ventilation member (9),
*) the air thermal treatment system comprising regulating means for regulating a heating air stream (20) admitted to the cabin (16), and an open circuit for conveying a plurality of air streams, the open circuit comprising a first air circuit (10) for conveying a source air stream (11) generated by a compressor (5) to at least one thermal treatment apparatus and a second air circuit (19) for conveying to the cabin (16) said heating air stream (20) coming from the thermal treatment of the source air stream (11),
the cooling system and the thermal treatment system comprising a group of shared members, including at least:
a) said compressor (5) generating a source air stream (11) at moderate pressure and temperature, the compressor being an accessory compressor (5) provided with an air inlet (44) and driven from an engine member (2),
b) said heat exchanger (8), forming cooperating means for cooling the fluid to be cooled (7) and for heating the source air stream (11) coming from the accessory compressor (5), the heating of the source air stream (11) producing a hot air stream (21) by withdrawing calories participating in the cooling of the thermal exchange structure (14)
**characterised in that** said ventilation member is a ventilator with ejection ramp (9) generating the cooling air stream (13) from an activation air stream (12), and **in that** the group of shared members comprises:
c) a distribution valve (22) for distributing said source air stream (11) selectively to the ventilator with ejection ramp (9) by forming the activation air stream (12) and/or to the cabin (16) by forming said heating air stream (20) coming from the hot air stream (21).

2. Installation according to claim 1,
**characterised in that** the distribution valve (22) is placed on the first air circuit (6) at the outlet from the heat exchanger (8), the activation air stream (12) coming more specifically from the hot air stream (21) formed by the source air stream (11) heated by the heat exchanger (8).

3. Installation according to any one of the preceding claims,
**characterised in that** the distribution valve (22) is a member for thermal treatment of fluids selectively between a heating of the ambient air (32) of the cabin (16) and a cooling of the fluid to be cooled (7), by inversely proportional amounts of the source air stream (11) respectively to the second air circuit (19) and/or to the ventilator with ejection ramp (9).

4. Installation according to any one of the preceding claims,
**characterised in that** the distribution valve (22) is placed under the dependence of control means, equally well manual control and/or automated control, between a mode for thermal treatment of the cabin (16) according to which a major quantity of the source air stream (11) is distributed to the cabin (16) after heating by the heat exchanger (8) and a cooling mode according to which a major quantity of the source air stream (11) is distributed to the ventilator with ejection ramp (9).

5. Installation according to claim 4,
**characterised in that** the implementation of automated control means (23) for controlling the distribution valve (22) is placed at least under the dependence of measuring means (28) for measuring the temperature of the fluid to be cooled (7), measuring means (27) for measuring the temperature of the ambient air (32) inside the cabin (16), and measuring means (29) for measuring the temperature of the source air stream (11).

6. Installation according to any one of the preceding claims,
**characterised in that** the heat exchanger (8) is organised as a dual thermal exchange member, with a thermal exchange between the fluid to be cooled (7) and the stream of cooling air (13), and with a thermal exchange between the fluid to be cooled (7) and the source air stream (11).

7. Installation according to claim 6,
**characterised in that** said thermal exchange structure (14) is in aeraulic communication with an outside air admission opening (46) from which the cooling air stream (13) comes, and is traversed by a channel (18) of the first air circuit (10) conveying the source air stream (11) through the thermal exchange structure (14) in order to form the hot air stream (21) maintained in the compressed state.

8. Installation according to any one of the preceding claims,
**characterised in that** the installation is equipped with a thermal exchange apparatus comprising a said heat exchanger (8) provided with a said thermal exchange structure (14), means for withdrawing calories and a first internal circuit (15) for circulating a fluid to be cooled (7), the means for withdrawing calories associating:
-) a second internal circuit (35) for circulating a heat-transfer fluid coming from the source air stream (11), and
-) a said ventilator with ejection ramp (9) provided with means for admitting (22,36) an activation air stream (12) coming from the source air stream (11).

9. Installation according to claim 8,
**characterised in that** the means for admitting the activation air stream comprise a regulated admission valve for regulated admission of the source air stream (11) to the ventilator with ejection ramp (9), the regulated admission valve being formed by said distribution valve (22).

10. Installation according to any one of the preceding claims,
**characterised in that** the ventilator with ejection ramp (9) comprises at least one module (41,42) provided with at least one air ejector (40,43) of overall conformation equally well conical or elongate.

11. Installation according to claim 10,
**characterised in that** the ventilator with ejection ramp (9) comprises a plurality of juxtaposed independent modules (41,42), each module (41,42) comprising a housing accommodating at least one elongate air ejector (43) otherwise accommodating a plurality of elongate air ejectors (43) mounted parallel inside the housing.

12. Installation according to any one of the preceding claims,
**characterised in that** the air inlet (44) of the accessory compressor (5) is in aeraulic communication with a third air circuit (45) included in the open circuit, the third air circuit (45) comprising a selection valve (34) for selecting suction of an admission air stream (33) by the compressor (5), said selection valve (34) distributing to the accessory compressor (5) in inversely proportional quantity an ambient air stream (32) taken from the cabin (16) and/or an air stream (17) outside of the cabin (16).

13. Installation according to claim 12,
**characterised in that** the selection valve (34) participates in said regulating means for regulating the heating air stream, the implementation of the selection valve (34) being placed under the dependence of the control means (23).

14. Installation according to any one of the preceding claims,
**characterised in that** the accessory compressor (5) is driven from a main gearbox (3) included in a main power plant (1) with which the aircraft is equipped.

15. Aircraft equipped with an installation according to any one of the preceding claims.

16. Aircraft of rotorcraft type according to claim 15,
**characterised in that** the rotorcraft is equipped:
*) with a main power plant (1) for driving at least one rotor, comprising at least one engine member (2) on which is engaged a main gearbox (3) from which a said accessory compressor (5) is driven,
*) with at least one said system for cooling at least one member to be cooled, including the main gearbox (3), comprising:
-) a said closed circuit (6) for circulating a fluid to be cooled (7) incorporating at least one said heat exchanger (8) equipped with a said ventilator with ejection ramp (9),
-) a said first air circuit (10) for conveying a source air stream (11) generated by the accessory compressor (5) from which a said activation air stream (12) comes,
*) with at least one said thermal treatment system for thermal treatment of a cabin, comprising:
a) said accessory compressor (5) fed with air selectively from the ambient air (32) of the cabin (16) and/or from an air intake (17) outside of the cabin (16) via a said selection valve (34),
b) said first air circuit (10) and said heat exchanger (8) traversed by a said channel (18) for conveying the source air stream (11),
c) a said second air circuit (19) for conveying heating air (20) coming from a hot air (21) obtained by heating the source air stream (11) by means of said heat exchanger (8),
*) with a said selective distribution valve (22) for said source air stream (11), included in a said cooling system and a said thermal treatment system associated with each other, the distribution valve (22) distributing inversely proportional admissions of the source air stream (11) to said ventilator with ejection ramp (9) and to said second air circuit (19) after thermal treatment of the source air stream (11) by the heat exchanger (8).
